# EUROPEAN PATENT APPLICATION

(11) **EP 1 160 711 A2**
(43) Date of publication of application: **05.12.2001**
(21) Application number: 01304527.3
(22) Date of filing: 23.05.2001
(51) Int. Cl.: G06F 17/60

(54) **Method and system for comprehensive management of chemical materials**

(30) Priority: 26.05.2000 JP 2000161111
(71) Applicant: Hitachi, Ltd., Chiyoda-ku, Tokyo (JP)
(72) Inventor: Sekine, Akira, Hitachiohta-shi, Ibaraki 313-0021 (JP); Ichikawa, Yoshiaki, Naka-gun, Ibaraki 319-1114 (JP); Oono, Takako, Hitachinaka-shi, Ibaraki 312-0062 (JP); Satou, Hirotaka, Hitachi-shi, Ibaraki 317-0076 (JP); Matsui, Tetsuya, Hitachi-shi, Ibaraki 316-0032 (JP)
(74) Representative: Calderbank, Thomas Roger

(57) **Abstract**

The present invention provides a method and system for management of chemical materials comprising providing a first data set containing which substances comprise the materials, providing a second data set containing which of the substances are to be controlled, the substances being categorized by a group control number, and providing a third data set containing a ratio of discharge of the controlled substances in a process and analyzing a preset amount of the materials in the process and determining a quantity of the controlled substances utilizing the first and second data sets, and determining an emissions quantity of the controlled substances utilizing the ratio and the quantity of the controlled substances and wherein the group control number is the same for the substances in the same group.

## Description

The present invention relates to a method and system for comprehensive management of chemical materials, in particular, a method and system for comprehensive management of chemical materials utilizing a database of substance under control.

Currently, a large variety of chemical materials are on the market containing hundreds of chemical substances. These chemical substances that are discharged into the atmosphere, soil, and water during the process of production, distribution, and storage of certain chemical substances are hazardous to the environment. Further, chemical substances that are contained in and transferred together with final products or in wastes that are discarded can be hazardous to the environment as well (the amount of chemical substances discharged and transferred are referred to as "amount discharged and transferred" hereinafter).

Therefore, companies which handle these chemical materials are required by law to report to the state or local public entities quantitative data regarding discharge and transfer of certain hazardous substances in their factories and premises. This requirement is intended to estimate the total environmental load throughout the country. Therefore, companies are required to manage the chemical substances they independently handle (those chemical substances which are managed or controlled by companies are referred to as "substances under control" hereinafter).

The amount of chemical substances discharged and transferred is estimated by means of an "emission factor" which is a numerical value indicating the ratio of the amount of chemical substances discharged and transferred to the amount of chemical substances handled in each individual process. For example, an emission factor of 1% for benzene for a particular process means that one ton of benzene is discharged into the atmosphere when 100 tons of benzene is used in that process.

Conventionally, a system for management of chemical materials only contains basic data on substances under control for individual processes. In other words, the conventional system only contains a basic category of substances that are under control, generally denoted as "x compound". For example, the guidelines for preparing such a disclosure document is described in the issue (December 1999) of "Kankyo Shigen." Thus, the conventional technology discussed above is unable to distinguish whether a certain chemical substance or compound should be monitored or not since they may all be generally categorized together.

The present invention provides a method and system for comprehensive management of chemical materials utilizing a database of substances under control containing which of the substances are to be controlled, the substances being categorized by a group control number.

In an object of the present invention a method for management of chemical materials is provided comprising the steps of providing a first data set containing which substances comprise the materials and providing a second data set containing which of the substances are to be controlled, the substances being categorized by a group control number. The method further provides the step of providing a third data set containing a ratio of discharge of the controlled substances in a process, analyzing a preset amount of the materials in the process and determining a quantity of the controlled substances utilizing the first and second data set and determining an emissions quantity of the controlled substances utilizing the ratio and the quantity of the controlled substances, wherein the group control number is the same for the substances in the same group.

In another object of the present invention a method for management of chemical materials is provided comprising the steps of providing a first data set containing which substances comprise the materials, providing a second data set containing which of the substances are to be controlled, the substances being categorized by a group control number and providing a third data set containing a ratio of discharge of the controlled substances in a process. The method further provides the step of providing a fourth data set containing handling precautions, hazards and legal regulations for the materials, analyzing a preset amount of the materials in the process and determining a quantity of the controlled substances utilizing the first and second data sets and determining an emissions quantity of the controlled substances utilizing the ratio and the quantity of the controlled substances, wherein the group control number is the same for the substances in the same group.

In yet another embodiment of the present invention a method for management of chemical materials is provided comprising the steps of providing a first data set containing which substances comprise the materials, providing a second data set containing which of the substances are to be controlled, the substances being categorized by a group control number and providing a third data set containing a ratio of discharge of the controlled substances in a process. The method further provides the step of analyzing a preset amount of the materials in the process and determining a quantity of the controlled substances utilizing the first and second data sets and determining an emissions quantity of the controlled substances utilizing the ratio and the quantity of the controlled substances.

In another object of the present invention, a system for management of chemical materials is provided comprising a server, comprising, a first data set containing which substances comprise the materials, a second data set containing which of the substances are to be controlled, the substances being categorized by a group control number and a third data set containing a ratio of discharge of the controlled substances in a process. The server is in communication with a processor, the processor being programmed to analyze a preset amount of the materials in the process and determining a quantity of the controlled substances utilizing the first and second data sets, determine an emissions quantity of the controlled substances utilizing the ratio and the quantity of the controlled substances and wherein the group control number is the same for the substances in the same group.

In another embodiment of the present invention a system for management of chemical materials is provided comprising a server, comprising, a first data set containing which substances comprise the materials, a second data set containing which of the substances are to be controlled, the substances being categorized by a group control number and a third data set containing a ratio of discharge of the controlled substances in a process. The system further provides a fourth data set containing handling precautions, hazards and legal regulations for the materials. The server is in communication with a processor, the processor being programmed to analyze a preset amount of the materials in the process and determining a quantity of the controlled substances utilizing the first and second data sets, determine an emissions quantity of the controlled substances utilizing the ratio and the quantity of the controlled substances and wherein the group control number is the same for the substances in the same group.

In yet another embodiment of the present invention a system for management of chemical materials is provided comprising a server, comprising, a first data set containing which substances comprise the materials, a second data set containing which of the substances are to be controlled, the substances being categorized by a group control number, and a third data set containing a ratio of discharge of the controlled substances in a process. The server is in communication with a processor, the processor being programmed to analyze a preset amount of the materials in the process and determining a quantity of the controlled substances utilizing the first and second data sets and determine an emissions quantity of the controlled substances utilizing the ratio and the quantity of the controlled substances.

In yet another embodiment of the present invention a system for management of chemical materials is provided comprising a first data set containing which substances comprise the materials, a second data set containing which of the substances are to be controlled, the substances being categorized by a group control number, a third data set containing a ratio of discharge of the controlled substances in a process. The first and second data sets being utilized to analyze a preset amount of the materials in the process and determine a quantity of the controlled substances. The ratio and the quantity of the controlled substances are utilized to determine an emissions quantity of the controlled substances and wherein the group control number is the same for the substances in the same group.

In another embodiment of the present invention a system for management of chemical materials is provided comprising a first data set containing which substances comprise the materials, a second data set containing which of the substances are to be controlled, the substances being categorized by a group control number, a third data set containing a ratio of discharge of the controlled substances in a process and a fourth data set containing handling precautions, hazards and legal regulations for the materials. The first and second data sets are utilized to analyze a preset amount of the materials in the process and determine a quantity of the controlled substances. The ratio and the quantity of the controlled substances are utilized to determine an emissions quantity of the controlled substances and wherein the group control number is the same for the substances in the same group.

In yet another embodiment of the present invention a system for management of chemical materials is provided comprising a first data set containing which substances comprise the materials, a second data set containing which of the substances are to be controlled, the substances being categorized by a group control number and a third data set containing a ratio of discharge of the controlled substances in a process. The first and second data sets being utilized to analyze a preset amount of the materials in the process and determine a quantity of the controlled substances and the ratio and the quantity of the controlled substances being utilized to determine an emissions quantity of the controlled substances.

In yet another object of the present invention a method for management of chemical materials is provided comprising the steps of providing a first data set containing substances which comprise the materials and providing a second data set containing legally controlled substances, wherein a substance which is not legally controlled but belongs to one of the legally controlled substances is grouped to one of the legally controlled substances by a group control number. The method further provides the step of providing a third data set containing a ratio of discharge of the controlled substances in a process and analyzing a preset amount of the materials in the process and determining a quantity of the controlled substances utilizing the first and second data set. Also, the method provides the step of determining an emissions quantity of the controlled substances utilizing the ratio and the quantity of the controlled substances and wherein the group control number is the same for the substances in the same group.

The above advantages and features of the invention will be more clearly understood from the following detailed description which is provided in connection with the accompanying drawings.
Fig. 1 is a diagram showing the construction of the system for comprehensive management of chemical substances in one embodiment of the present invention;
Fig. 2 illustrates Examples (a to d) of the data structure of each database in the system for comprehensive management of chemical substances in one embodiment of the present invention;
Fig. 3 is a conceptual diagram showing the handling of substances under control in one embodiment of the present invention;
Fig. 4 is an example of the data structure of the database of substances under control in the system for comprehensive management of chemical substances in one embodiment of the present invention;
Fig. 5 is an example of the user interface to execute the means for defining the group of substances under control in the system for comprehensive management of chemical substances in one embodiment of the present invention;
Fig. 6 is a flow diagram showing the procedure to register a new control number for the group of substances by means of the user interface screen shown in Fig. 5;
Fig. 7 is a flow diagram of processing by the input means in one embodiment of the present invention;
Fig. 8 is a flow diagram of processing by the process totalizing means in one embodiment of the present invention;
Fig. 9 is a flow diagram of processing by the estimating and computing means in one embodiment of the present invention;
Fig. 10 is a flow diagram of processing by the overall totalizing means in one embodiment of the present invention;
Fig. 11 is a diagram showing the systematic construction of the system for comprehensive management of chemical substances in one embodiment of the present invention;
Fig. 12 is an example of the mode of business utilizing the system for comprehensive management of chemical substances in one embodiment of the present invention; and
Fig. 13 is a flow diagram for execution of an example of the mode of business shown in Fig. 12.

Exemplary embodiment of the present invention will be described below in connection with the drawings. Other embodiments may be utilized and structural or logical changes may be made without departing from the spirit or scope of the present invention. Like items are referred to by like reference numerals throughout the drawings.

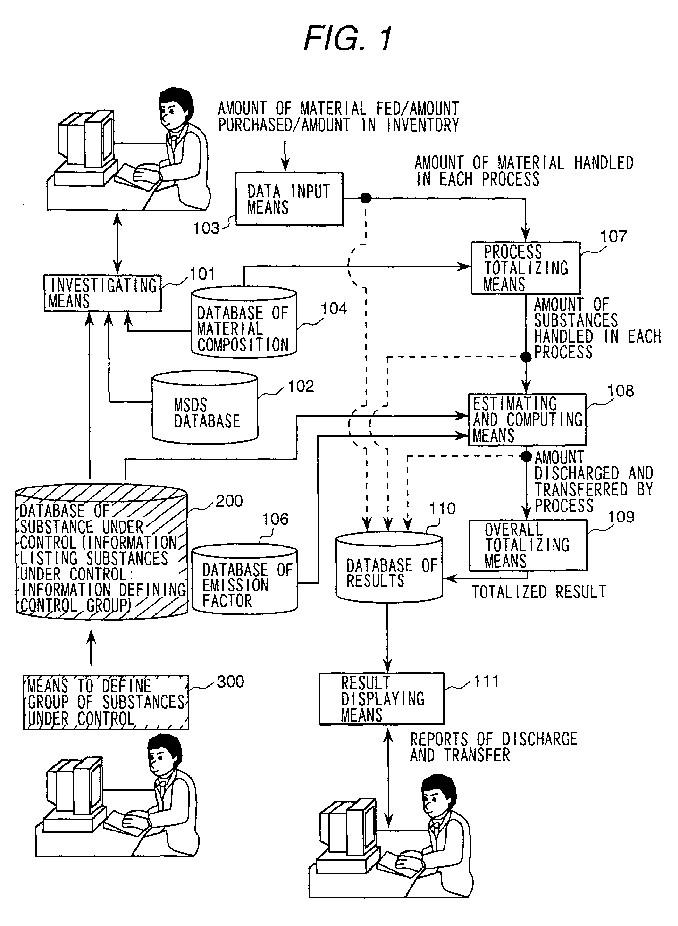

Referring now to the drawings, Fig. 1 is a diagram showing the construction of the system for comprehensive management of chemical substances in one embodiment of the present invention. The system for comprehensive control of chemical substances consists of an investigating means 101, an MSDS database 102, a data input means 103, a database of material composition 104, a database of substances under control 200, a database of emission factor 106, a process totalizing means 107, an estimating and computing means 108, an overall totalizing means 109, a database of results 110, a result display means 111, and a means to define substances under control 300.

The MSDS database 102 is a collection of Material Safety Data Sheets (MSDS) describing handling precautions, hazardousness, and legal regulations for individual materials. The term "materials" means any raw material which is made into finished products or which is used for production of finished products, the former including unprocessed products (such as ores and crude oil), primary products (such as steel sheets), and semiprocessed products (such as substrates), and the latter including coating agents, detergents, paints, and coolants.

The term "finished products" means any product which is shipped as manufactured goods by companies. Their examples include automobiles, cameras, personal computers, films, TV sets, CPUs, boards, cables, clothing, foods, buildings, electricity, water, etc.

The database of material composition 104 is a collection of data on compositions of materials. Any one material is usually composed of a plurality of substances or molecules. Any substance or molecule is identified by a Chemical Abstracts Service (CAS) registry number. The records in the database of material composition 104 should preferably be organized such that each field contains the name of the material, the identifier of substance under control contained in the material (for example, the name of substance under control and the CAS registry number of the substance under control), and the upper and lower limits of content (preferably mass percent) of the substance under control. The substances under control embrace those chemical substances (specified chemical substances of first kind) which are regulated by the law for Pollutant Release and Transfer Registers (PRTR). They also embrace chemical substances regulated by the chemical substance control guide and the environmental preservation guide issued by local governments. They are those substances which seriously affect the environment or which need control. Their examples include toluene, xylene, methyl isobutyl ketone, isopropanol, lead chromate, epoxy resin, methylene chloride, benzene, diethyl zinc, acrylamide, mercury, and vinyl chloride.

The database of substances under control 200 is a list of substances under control. It stores records each containing as fields the type of substances under control (such as poisonous substances, deleterious substances, objects of control, substances designated by regulations, and substances under self-posed control) and the identifier of such substances under control. Moreover, it also stores records each containing as fields the identifier and physical properties of the substances under control. The physical properties include factors for conversion from molecular weight into pure metal mass and values of vapor pressure, density, etc. The database of substances under control 200 also stores information listing substances under control and information defining control groups.

The database of emission factor 106 stores records each containing as fields the substance under control for individual points of discharge and transfer (such as atmosphere, waters, soil, consumption, disposal by contract, recycling, and production) and the amount of discharge and transfer of the substance under control (preferably in terms of ratio by weight) for individual processes and combination of materials handled in each process. The term "process" means the production process of products, the inspection process of products, and the development process of products which are carried out by the company. Examples include chemical processes, including, molding process, fabricating process, heat-treatment process, coating process, cleaning process, etching process, surface-treatment process, and assembling process.

The investigating means 101 functions to retrieve necessary data from records in the MSDS database 102, the database of material composition 104, the database of substances under control 200, and the database of emission factor 106 by means of fields relating to one another, to retrieve necessary date by means of the name of substance under control or the CAS registry number, or to retrieve necessary data from texts in the field by means of partial match. It also functions to output the retrieved result to the display or file.

The database of results 110 stores those records which are utilized by or generated by the data input means 103, the process totalizing means 107, the estimating and computing means 108, and the overall totalizing means 109. Such records include those concerning the amount of material handled, the amount of substance handled, the amount discharged and transferred, and the amount totalized.

The result display means 111 retrieves and reads the contents of the database of results 110 and displays the totalized results. For example, it associates with one another and displays the name of substances under control, the CAS registry number of the substances under control, the amount of the substances under control discharged and transferred at individual points of discharge and transfer, and the total amount of the substances under control discharged and transferred at individual points of discharge and transfer. It also associates with one another and displays the name of substances under control, the CAS registry number of the substances under control, the department which handled the substance under control, the process which processed the material containing the substance under control, and the amount of the substances under control which was handled in one year.

The system for comprehensive management of chemical substances in one embodiment of the present invention is executed by programs stored in a recording medium (such as floppy disk, hard disk, memory card, memory stick, MO, PD, CD-ROM, CD-R/RW, DVD-ROM, and DVD-RAM). The programs control the investigating means 101 for investigation processing, the data input means 103 for data input processing, the process totalizing means 107 for process totalizing processing, the estimating and computing means 108 for estimating and computing process, the overall totalizing means 109 for overall totalizing processing, and the result display means 111 for display processing.

The system for comprehensive management of chemical substances in one embodiment of the present invention employs databases stored in a recording medium (such as floppy disk, hard disk, memory card, memory stick, MO, PD, CD-ROM, CD-R/RW, DVD-ROM, and DVD-RAM). These recording media contain the MSDS database 102, the database of material composition 104, the database of substances under control 200, the database of emission factor 106, and the database of results 110 (such as records of the amount of materials handled, records of the amount of substances handled, records of the amount discharged and transferred, and records of totalized results).

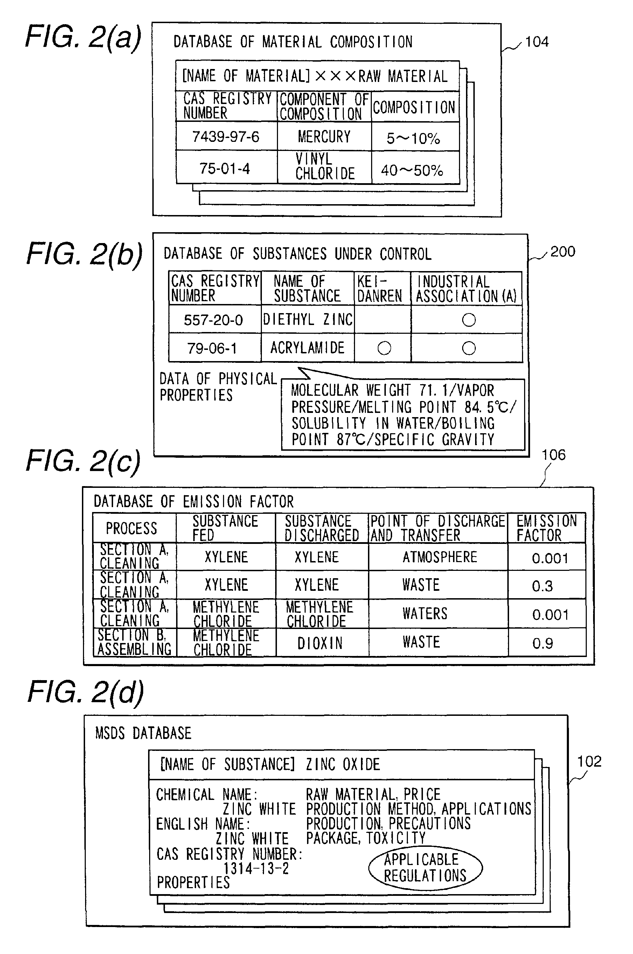

Fig. 2 is a diagram showing an example of data structure of each database in the system for comprehensive control of chemical substances as one embodiment of the present invention.

Fig. 2(a) shows an example of the data structure of the database of material composition 104. This database stores, using the material name as the key index, the CAS registry number and composition components of the substance under control contained in the material and the upper and lower limits (preferably in terms of wt%) of composition, for each material. The material name is the trade name on the market or the product number assigned by the purchasing department. Any coding system may be used so long as it permits each item to be identified uniquely (for one-to-one correspondence).

Fig. 2(b) shows an example of data structure of the database of substances under control 200. This database stores, using the CAS registry number of the substance under control as the key index, the substance under control, the association which designates the substance under control, and the physical data of the substance under control, which are related with one another. The physical data include the molecular weight, melting point, boiling point, vapor pressure, water solubility, and specific gravity of the substance under control.

The database of substances under control 200 also stores information listing substances under control and information defining control groups. A detailed explanation will be given to the data structure of information listing substances under control and information defining control groups.

Fig. 2(c) shows an example of data structure of the database of emission factor 106. This database stores, using the company's process as the key index, the kind of the substance handled by the process, the kind of substance discharged and transferred from the process, the point of discharge and transfer, and the emission factor, which are related to one another. The emission factor is a ratio of the amount of substance discharged to the amount of substance introduced into the process.

Fig. 2(d) shows an example of the data structure of the MSDS database. The MSDS database stores, using the substances under control or the materials as the key index, data concerning the chemical name, English name, CAS registry number, properties, raw materials, price, production method, applications, production, handling precautions, package, toxicity, and applicable regulations of the substances under control.

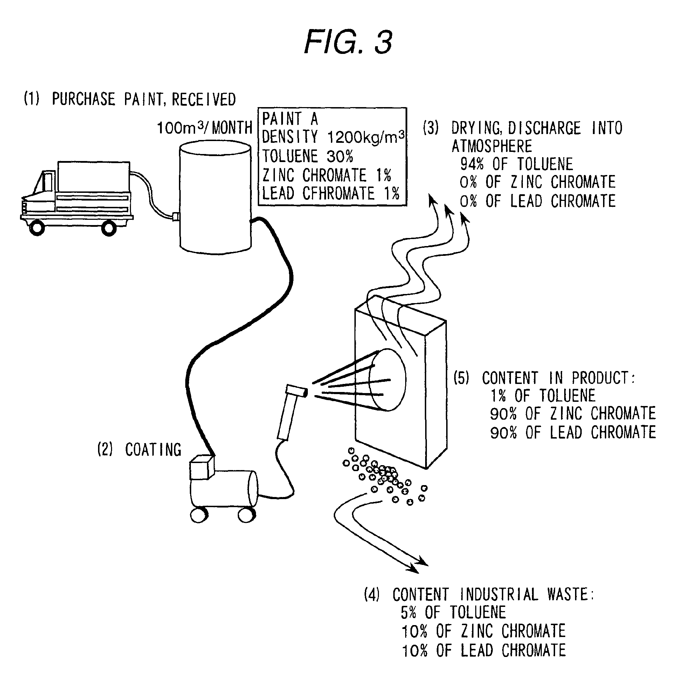

Fig. 3 is a diagram showing the handling of the substance under control as one embodiment of the present invention. It is assumed that this example of handling is carried out in a certain work place.
(1) The coating process starts with purchasing the material called "coating A". The purchase amount of coating A is 100 m³/month, and the amount of coating A in storage tank is constant. Therefore, it is assumed that the amount of coating A handled in the process is 100 m³/month. Since coating A has a density of 1200 kg/m³, the weight of coating A handled is 120,000 kg/month.
(2) All of this quantity is put in the coating process. Calculations up to this stage are carried out by the data input means 103 shown in Fig. 1.
   The information regarding the contents of coating A, namely, 30% toluene, 1% zinc chromate, and 1% lead chromate is read from the database of material composition 104 shown in Fig. 1. The result of calculations is that the amount of substance introduced into the coating process is 36,000 kg/month of toluene. This calculation is accomplished by the process totalizing means 107.
(3) In this coating process, coating A is applied by spraying to the product. Part of coating A is discharged into the atmosphere in the drying step. The fact that 94% of toluene, 0% of zinc chromate, and 0% of lead chromate are discharged into the atmosphere is read from the database of emission factor 106 shown in Fig. 1. Hence, it is estimated from this that 33,840 kg/month of toluene is discharged into the atmosphere.
(4) Likewise, it is estimated that industrial waste discarded every month is 1,800 kg of toluene, 120 kg of zinc chromate, and 120 kg of lead chromate. It is also estimated that the product shipped contains 360 kg of toluene, 1,080 kg of zinc chromate, and 1,080 kg of lead chromate. This estimating calculation is accomplished by the estimating and computing means 108 shown in Fig. 1.

The estimation in this way is carried out by the overall totalizing means 109, and the results are stored in the database of results 110. When the results of estimation of substances under control are stored in the database of results 110, identification information is attached to the substance under control according to the database in the database of substances under control 200, so that the substances under control belonging to the same substance group has the same substance group control number (note, although a group control number is utilized here for ease of explanation, any type of identification can be utilized, i.e. "group control ID").

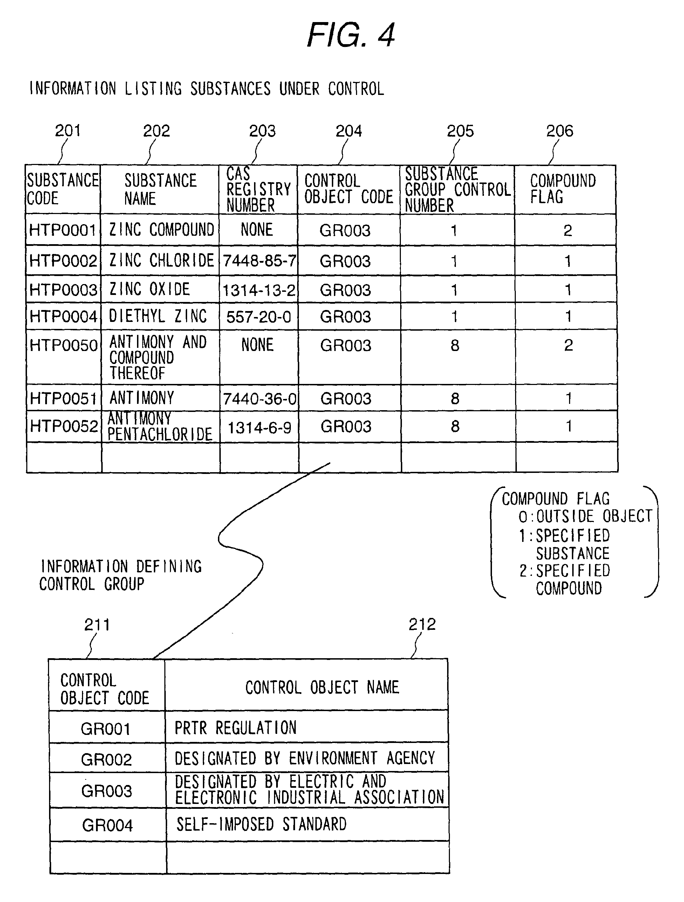

The following is an explanation of the data structure of data stored in the database of substances under control 200. The database of substances under control 200 stores information listing substances under control and information defining control group as shown in Fig. 4.

The information listing substances under control consists of the name of the substance under control 202, substance code of substance under control 201, CAS registry number 203, control object code 204, substance group control number 205, and compound flag 206. The control object code 104 indicates on what control object it is based according to the information defining control group. In other words, the database of substances under control 200 contains information or control object code, designating the source of the control.

The substance group control number 205 is the control number of substances under control which is appointed by the control object group, and the substance under control belonging to the same substance group has the same substance control number. For example, if a substance under control which is generally called "×××× compound" like zinc compound has a substance group control number 1, then all the substances belonging to "×××× compound", that is, zinc chloride, zinc oxide, and diethyl zinc belonging to zinc compounds are given the same substance control number 1. In other words, the substance under control is categorized by a group control number and the number is the same for substances in the same "group" or "compound."

ALso, this substance control number 205 is designed for control by giving the same identifying information to the substance under control belonging to the same substance group. The identifying information may be numerals shown in Fig. 4 and any letters, alphabet, or signs.

The compound flag 206 is given 2 in a case where the specified compound or substance under control in which the data of substance name 202 is generally called "×××× compound", 1 in the case of specified substance or substance belonging to the specified compound, and 0 in the case of outside control or substance which does not need control. The compound flag 206 may be anything so long as it can recognize whether the substance under control is the specified compound, specified substance, or substance which does not need control. It may be numerals shown in Fig. 4 and any letters, alphabet, or signs. In other words, the database of substances under control 200 further contains information whether the substance is a special compound or not.

Also, this work place purchases a material called "coating B" and estimates substances under control in the same way as mentioned above. The results totalized by the overall totalizing means 109 are stored in the database of results 110, with an identifier attached to the substance under control.

Moreover, this work place also estimates substances under control in other processes. The totalized result obtained by the overall totalizing means 109 is given an identifier and then stored in the database of results 110. In this way, this work place estimates substances under control for each product handled and for each process, and the result of estimation is stored in the database of results 110. Then, this work place totalizes the results of estimation for the substance under control called, say, zinc compound, according to the provision of PRTR.

It is assumed that the database of results 110 has stored the results of estimation of zinc chloride, zinc oxide, and diethyl zinc as zinc compounds. Since they are given the same identifying information, the results of estimation are totalized on the basis of this identifying information, so that it is possible to totalize the results of estimation for the substance under control called zinc compound.

Hence, a method for management of chemical materials is provided comprising the steps of providing a first data set containing substances which comprise the materials and providing a second data set containing legally controlled substances, wherein a substance which is not legally controlled but belongs to one of the legally controlled substances is grouped to one of the legally controlled substances by a group control number. The method further provides the step of providing a third data set containing a ratio of discharge of the controlled substances in a process and analyzing a preset amount of the materials in the process and determining a quantity of the controlled substances utilizing the first and second data set. Also, the method provides the step of determining an emissions quantity of the controlled substances utilizing the ratio and the quantity of the controlled substances and wherein the group control number is the same for the substances in the same group.

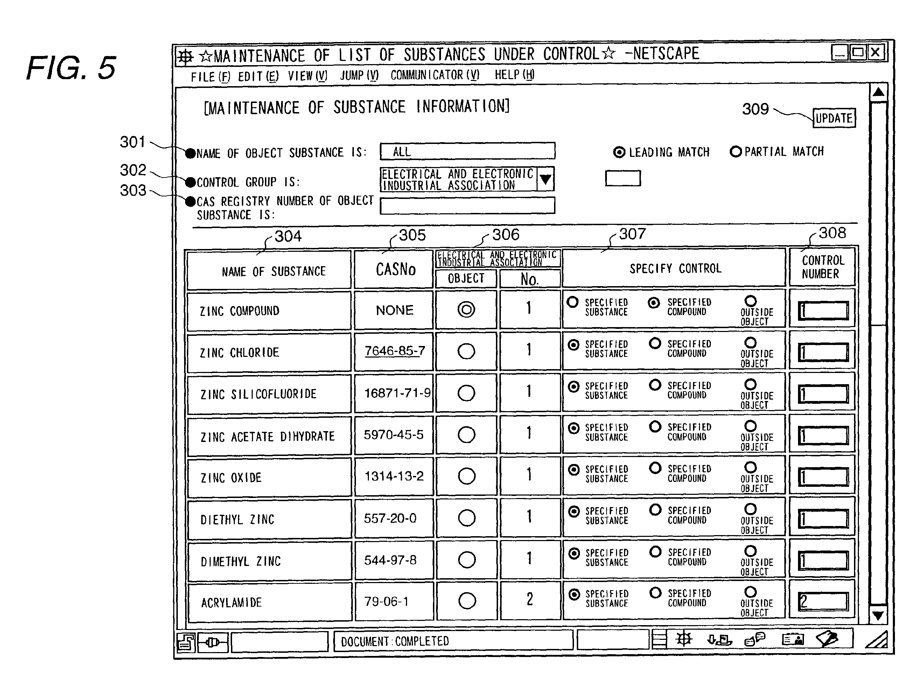

Fig. 5 is an example of the user interface screen to execute the means to define substances under control 300 shown in Fig. 1. This screen displays the information of the database of substances under control according to the retrieving condition of the specified object substance name 301, control group 302, and CAS registry number of object substance 303. The user interface shown in Fig. 5 is an example of the screen showing all the substances controlled by the control group which is the Electric and Electronic Industrial Association 306.

Any one of the specified substance, specified compound, and non-applicable substance is specified by means of the item of the control specification 307 for each substance of the substance name 304. Then, the substance group control number is specified by means of the item of the control number 308. As the update 309 is specified, the newly specified substance group control number is registered in the database 200 of substances under control.

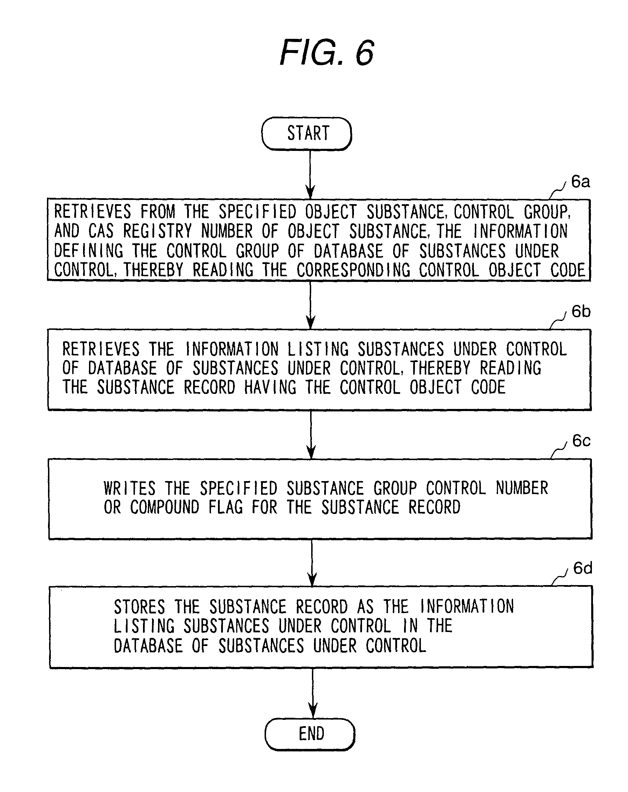

Fig. 6 is a flow diagram showing the procedure to newly register the substance group control number in the user interface screen shown in Fig. 5.

Step 6a retrieves information defining the control group of the database of substances under control from the specified object substance, control group, and CAS registry number of object substance, thereby reading the corresponding control object code.

Step 6b retrieves information listing substances under control of the database of substances under control, thereby reading substance records having the control object code which has been read in step 6a.

Step 6c writes the specified substance group control number or compound flag for the substance record which has been read in step 6b.

Step 6d updates the substance record which has been read in step 6b and store the updated substance record as information listing substances under management in the database of substances under control.

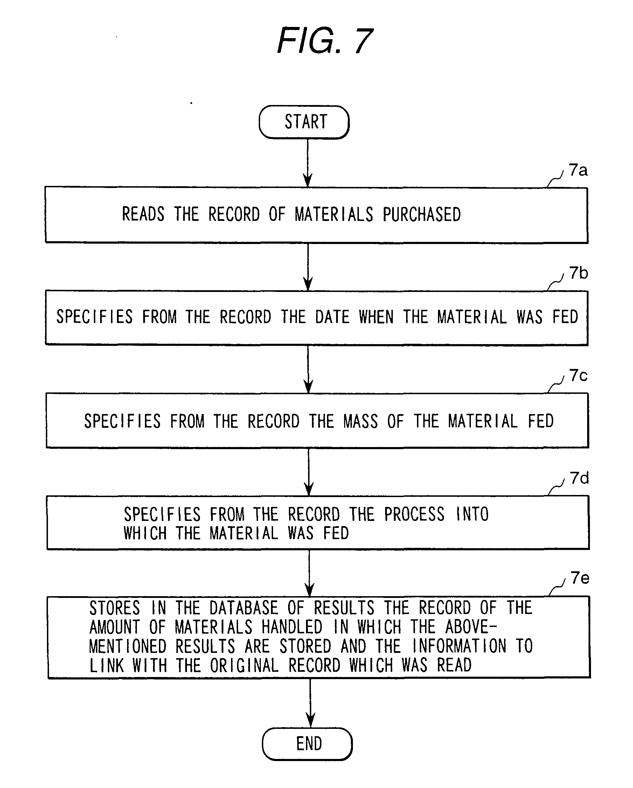

Fig. 7 shows the processing flow of the data input means 103 in the system for comprehensive management of chemical substances as one embodiment of the present invention.

The data input means 103 reads information about feeding and purchase of materials from the materials purchase record and inventory control record. The example here demonstrates the reading of material purchase records in step 7a.

Step 7b specifies the date from the material purchase record which has been read in step 7a. The purchase record contains the data field meaning Japanese Era or Christian Era. The date extracted is converted into that of Christian Era.

Step 7c specifies the amount of material introduced from the material purchase record which has been read in step 7a.

Step 7d specifies the process into which the material was introduced by utilizing the name of the orderer from the material purchase record which has been read in step 7a.

Finally, in step 7e, the data input means 103 stores a series of results in the database of results 110 as the record of amount introduced into the process. It also stores the information to link the original data which has been read, or the information to link each piece of data with the material purchase record retrospectively from the material introduced into the process.

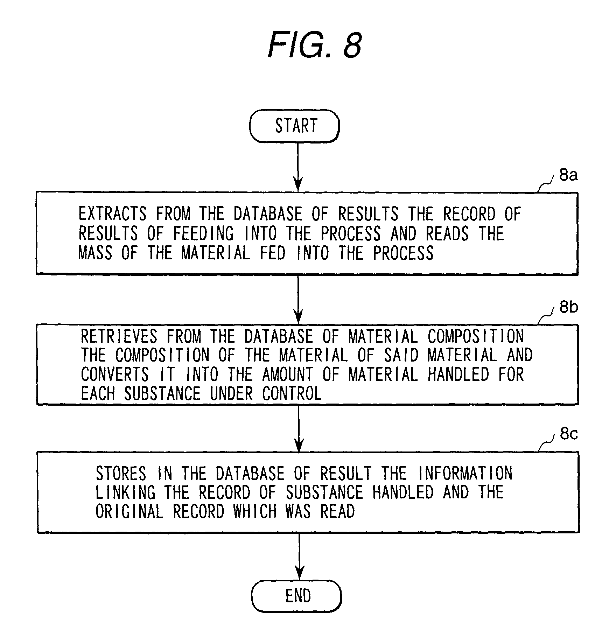

Fig. 8 is a processing flow of the process totalizing means 107 in the system for comprehensive management of chemical substances in one embodiment of the present invention.

First, step 8a retrieves the record of results of feeding into the process from the data stored in the database of results 110 and reads the amount of the material introduced into the process.

Then, step 8b retrieves the composition of the component of the material which has been read in step 8a from the database of material composition 104 and converts it into the amount handled for each substance under control. The amount of the substance under control which has been handled is obtained in terms of kg by multiplying the component composition stored in terms of mass percent because the amount of the material introduced is expressed in terms of kg.

Finally, step 8c stores, in the database of results 110, both the record of the amount of substance handled which has been obtained in step 8b and the information to link with the original data which has been read.

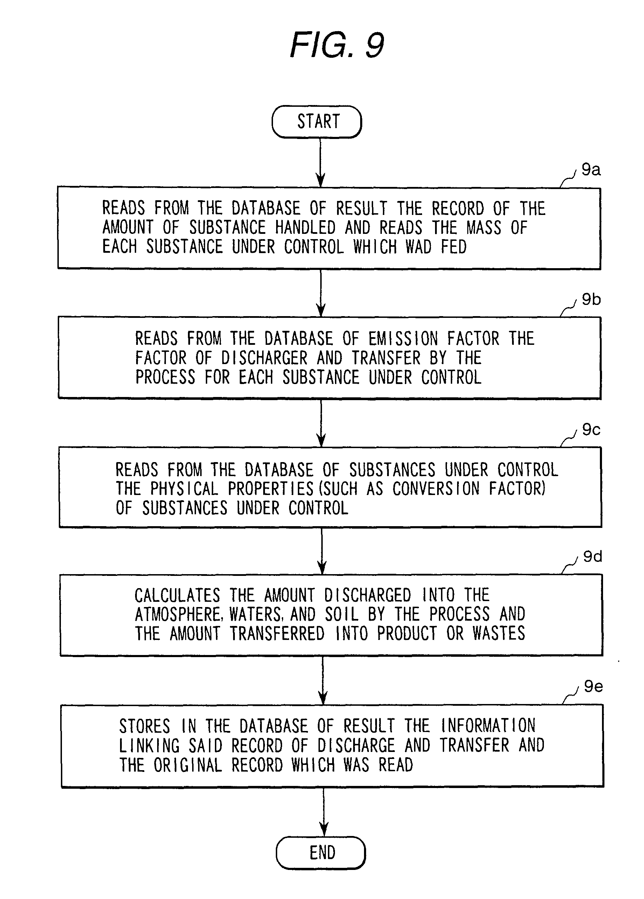

Fig. 9 is a processing flow of the estimating and computing means 108 in the system for comprehensive management of chemical substances in one embodiment of the present invention.

First, step 9a retrieves the record of the amount of materials handled from the database of results 110 and reads the amount of each substance under control which has been introduced into the process.

Then, step 9b reads the factor of discharge and transfer by the process for each substance under control from the database of emission factor 106.

Then, step 9c reads the physical properties (e.g., conversion factor) of the substance under control from the database of substances under control 200.

Then, step 9d calculates the amount discharged into the atmosphere, waters, and soil by the process, the amount transferred as product, and the amount transferred as waste. The factor of discharge and transfer is a numerical value indicating the ratio of the substance introduced to the substance discharged and transferred. Therefore, it is possible to calculate the amount discharged and transferred to individual destinations if the amount of substance introduced is multiplied by the factor of discharge and transfer. Also, in the case where the substance is a metal salt, it is necessary to express discharged material in terms of pure metal element; therefore, conversion is carried out by using the data of physical properties stored in the database 200 of substances under control.

Finally, step 9e stores in the database of results 110 the information to link with the original record into which the record of discharge and transfer has been read.

Note, when the record of discharge and transfer is stored in the database of results 110, an identification is attached to the substance under control according to the database of substances under control and the substance under control belonging to the same substance group is given the same substance group control number.

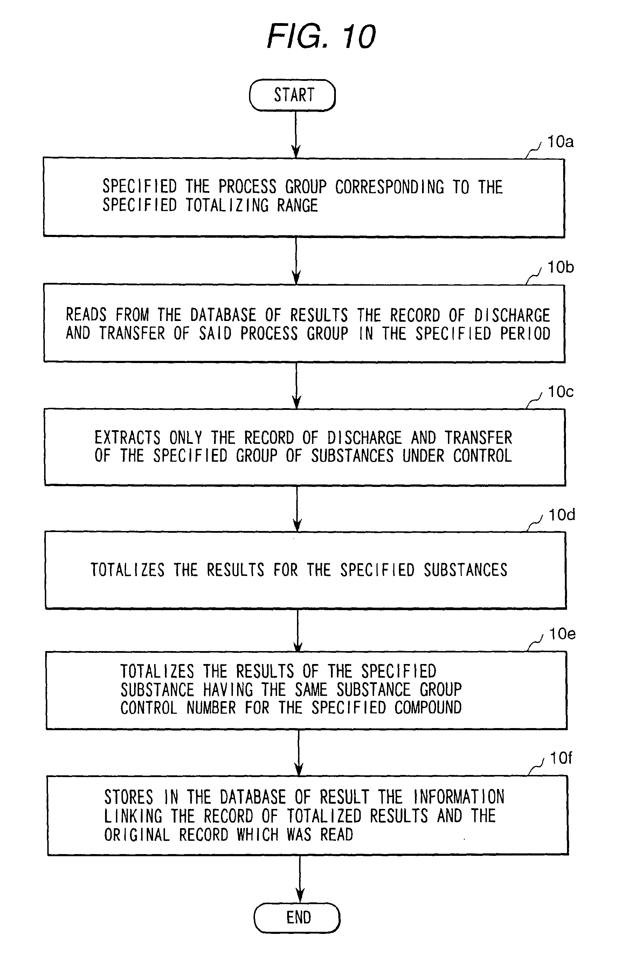

Fig. 10 is a processing flow of the overall totalizing means 109 in the system for comprehensive management of chemical substances in one embodiment of the present invention.

First, step 10a specifies the process group corresponding to the specified range to be totalized (e.g., work site, division, department, line, step, factory, work place, working group, and district).

Next, step 10b reads from the database of results 110 the records concerning the amount of substance discharged and transferred belonging to the process group specified in step 10a in the specified period (e.g., from April 1, 2000 to May 31, 2000).

Then, step 10c reads only the record concerning the amount of substance discharged and transferred of the group of specified substances under control (e.g., those substances specified by the Environment Agency).

Next, step 10d totalizes these records.

Next, step 10e totalizes for specified compounds the specified substance having the same substance group control number.

Finally, step 10f stores in the database of results 110 the record of totalized results and the information to link with the original record which has been read from the record of totalized results.

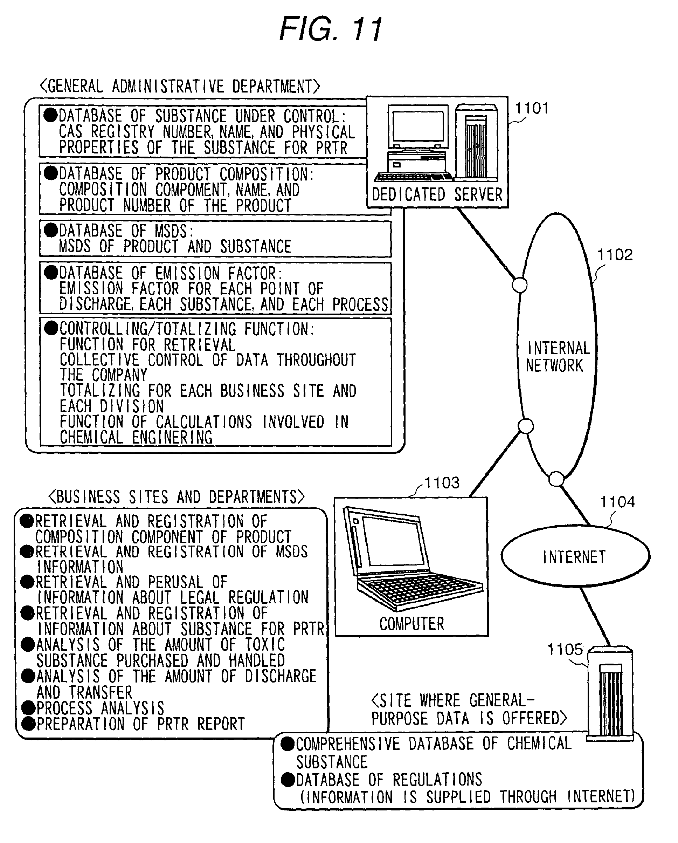

Fig. 11 is a diagram showing one example of the construction of the system for comprehensive management of chemical substances in one embodiment of the present invention.

A dedicated server computer 1101 is installed in the supervisory division, and it stores all of the databases and processing units shown in Fig. 1. For example, an internal network 1102 is connected to this dedicated server computer 1101 so as to make it possible to utilize all the functions by means of the computer 1103 in various departments in the factories and business sites of the corporation. Note, the internal network 1102 is only one example, the same function as mentioned above may be accomplished through the internet as well. If the databases shown in Fig. 1 are placed in the general-purpose data supply site 1105 and then connected to it through the internet, then it is possible to utilize a broad range of data which is not entirely stored in the dedicated server computer 1101 or data which are frequently changed.

Also, it is possible to send and renew data concerning MSDS, data concerning material composition, data concerning substances under control, and data concerning emission factor to the dedicated server computer 1101 from the general-purpose data supply site 1105 through the internet 1104 and the internal network 1102.

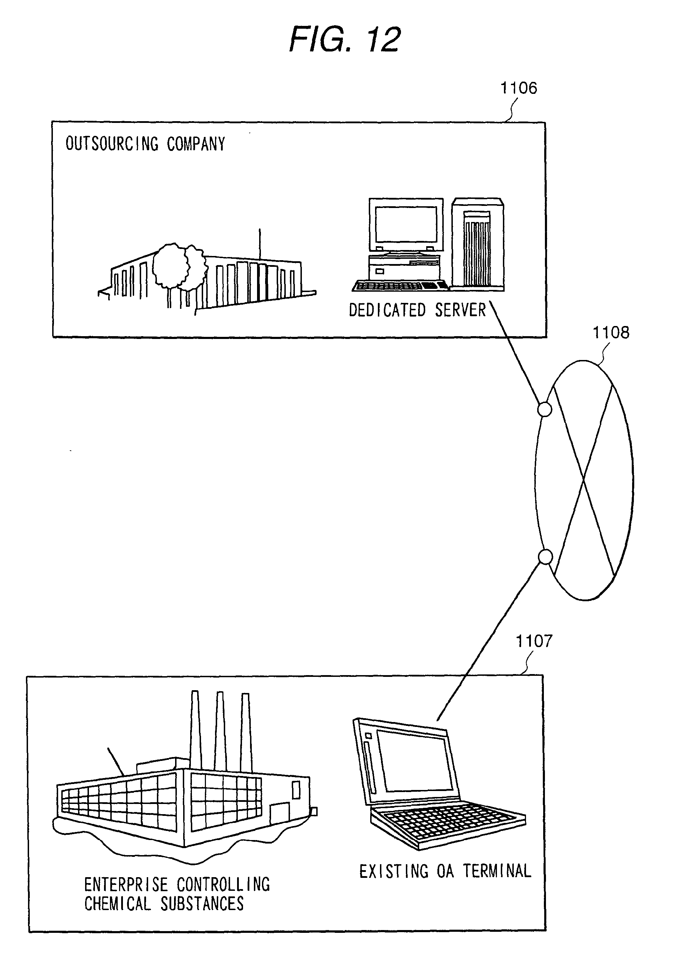

Fig. 12 shows an example of the mode of business that utilizes the system for comprehensive management of chemical substances in one embodiment of the present invention. The databases shown in Fig. 1 are placed in the dedicated server in the outsourcing company (indicated by 1106), and this server is connected to the company controlling chemical substances (indicated by 1107) through the internet (indicated by 1108). Thus the company controlling chemical substances (1107) is able to calculate the amount of substances under control discharged and transferred by utilizing the databases stored in the dedicated server in the outsourcing company.

Also, the company controlling chemical substances (1107) calculates the amount of substances under control discharged and transferred by utilizing the databases stored in the dedicated server in the outsourcing company in the same way as the system for comprehensive management of chemical substances explained with reference to Fig. 1, except that the databases stored in the dedicated server in the outsourcing company are used.

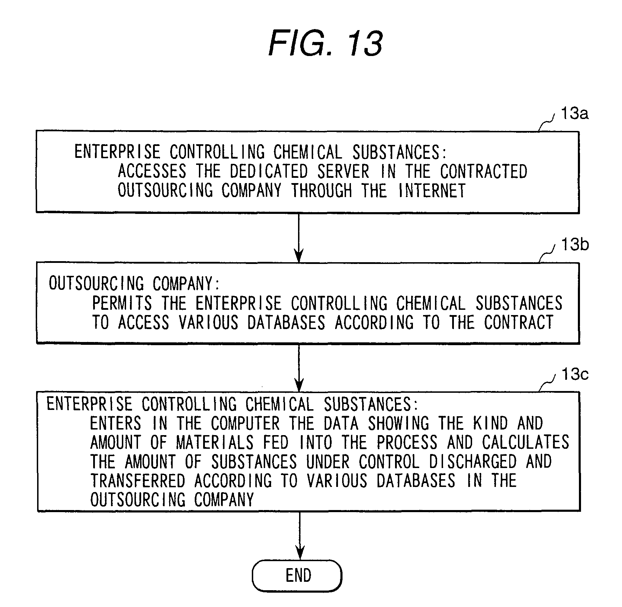

Fig. 13 is a flow diagram for carrying out an example of the mode of business shown in Fig. 12. First, as shown in 13a, the company controlling chemical substances accesses the dedicated server of the outsourcing company through the internet (or a private line).

Then, as shown in 13b, the outsourcing company permits the company controlling chemical substances to access the databases stored in the server according to the contract with the company controlling chemical substances.

Finally, as shown in 13c, the company controlling chemical substances enters in the computer the amount and kind of material to be introduced into the process and then calculates the amount of substance under control discharged and transferred on the basis of databases owned by the outsourcing company.

The outsourcing company possesses the database of substances under control which stores data such that the same identifying information is given to the specified compound and the specified substance belonging to the specified compound. This permits the company controlling chemical substances to totalize substances under control which are generally called compounds in such a way that the identifying information includes both the specified compound and the specified substance belonging to the specified compound.

Hence, the present invention provides a method and system for management of chemical materials comprising providing a first data set containing which substances comprise the materials and providing a second data set containing which of the substances are to be controlled, the substances being categorized by a group control number. The method and system further provides providing a third data set containing a ratio of discharge of the controlled substances in a process and analyzing a preset amount of the materials in the process to determine a quantity of the controlled substances utilizing the first and second data set. The method and system further provides determining an emissions quantity of the controlled substances utilizing the ratio and the quantity of the controlled substances, wherein, the group control number is the same for the substances in the same group.

Although the invention has been described above in connection with exemplary embodiments, it is apparent that many modifications and substitutions can be made without departing from the spirit or scope of the invention. Accordingly, the invention is not to be considered as limited by the foregoing description, but is only limited by the scope of the appended claims, as interpreted by the description and drawings.

## Claims

1. A method for management of chemical materials comprising the steps of:
providing a first data set containing which substances comprise said materials;
providing a second data set containing which of said substances are to be controlled, said substances being categorized by a group control number;
providing a third data set containing a ratio of discharge of said controlled substances in a process;
analyzing a preset amount of said materials in said process and determining a quantity of said controlled substances utilizing said first and second data set;
determining an emissions quantity of said controlled substances utilizing said ratio and said quantity of said controlled substances; and
wherein said group control number is the same for said substances in the same group.

2. The method of claim 1 wherein said second data set further contains information whether said substance is a specified compound.

3. The method of claim 1 wherein said second data set further contains a control object code for designating the source of the control.

4. The method of claim 1 wherein said process is a chemical reaction.

5. The method of claim 1 further comprising the step of providing a fourth data set containing handling precautions, hazards and legal regulations for said materials.

6. The method of claim 1 wherein said data sets are provided by an outsourcing company.

7. A method for management of chemical materials comprising the steps of:
providing a first data set containing which substances comprise said materials;
providing a second data set containing which of said substances are to be controlled, said substances being categorized by a group control number;
providing a third data set containing a ratio of discharge of said controlled substances in a process;
providing a fourth data set containing handling precautions, hazards and legal regulations for said materials;
analyzing a preset amount of said materials in said process and determining a quantity of said controlled substances utilizing said first and second data sets;
determining an emissions quantity of said controlled substances utilizing said ratio and said quantity of said controlled substances; and
wherein said group control number is the same for said substances in the same group.

8. The method of claim 7 wherein said second data set further contains information whether said substance is a specified compound.

9. The method of claim 7 wherein said second data set further contains a control object code for designating the source of the control.

10. The method of claim 7 wherein said process is a chemical reaction.

11. The method of claim 7 wherein said data sets are provided by an outsourcing company.

12. A method for management of chemical materials comprising the steps of:
providing a first data set containing which substances comprise said materials;
providing a second data set containing which of said substances are to be controlled, said substances being categorized by a group control number;
providing a third data set containing a ratio of discharge of said controlled substances in a process;
analyzing a preset amount of said materials in said process and determining a quantity of said controlled substances utilizing said first and second data sets; and
determining an emissions quantity of said controlled substances utilizing said ratio and said quantity of said controlled substances.

13. The method of claim 12 wherein said group control number is the same for said substances in the same group.

14. The method of claim 12 wherein said second data set further contains information whether said substance is a specified compound.

15. The method of claim 12 wherein said second data set further contains a control object code for designating the source of the control.

16. The method of claim 12 wherein said process is a chemical reaction.

17. The method of claim 12 further comprising the step of providing a fourth data set containing handling precautions, hazards and legal regulations for said materials.

18. The method of claim 12 wherein said data sets are provided by an outsourcing company.

19. A system for management of chemical materials comprising:
a server comprising:
a first data set containing which substances comprise said materials;
a second data set containing which of said substances are to be controlled, said substances being categorized by a group control number;
a third data set containing a ratio of discharge of said controlled substances in a process;
said server being in communication with a processor, said processor being programmed to:
analyze a preset amount of said materials in said process and determining a quantity of said controlled substances utilizing said first and second data sets;
determine an emissions quantity of said controlled substances utilizing said ratio and said quantity of said controlled substances; and
wherein said group control number is the same for said substances in the same group.

20. The system of claim 19 wherein said second data set further contains information whether said substance is a specified compound.

21. The system of claim 19 wherein said second data set further contains a control object code for designating the source of the control.

22. The system of claim 19 wherein said process is a chemical reaction.

23. The system of claim 19 further comprising a fourth data set containing handling precautions, hazards and legal regulations for said materials.

24. The system of claim 19 wherein said data sets are provided by an outsourcing company.

25. A system for management of chemical materials comprising:
a server comprising:
a first data set containing which substances comprise said materials;
a second data set containing which of said substances are to be controlled, said substances being categorized by a group control number;
a third data set containing a ratio of discharge of said controlled substances in a process;
a fourth data set containing handling precautions, hazards and legal regulations for said materials;
said server being in communication with a processor, said processor being programmed to:
analyze a preset amount of said materials in said process and determining a quantity of said controlled substances utilizing said first and second data sets;
determine an emissions quantity of said controlled substances utilizing said ratio and said quantity of said controlled substances; and
wherein said group control number is the same for said substances in the same group.

26. The system of claim 25 wherein said second data set further contains information whether said substance is a specified compound.

27. The system of claim 25 wherein said second data set further contains a control object code for designating the source of the control.

28. The system of claim 25 wherein said process is a chemical reaction.

29. The system of claim 25 wherein said data sets are provided by an outsourcing company.

30. A system for management of chemical materials comprising:
a server comprising:
a first data set containing which substances comprise said materials;
a second data set containing which of said substances are to be controlled, said substances being categorized by a group control number;
a third data set containing a ratio of discharge of said controlled substances in a process;
said server being in communication with a processor, said processor being programmed to:
analyze a preset amount of said materials in said process and determining a quantity of said controlled substances utilizing said first and second data sets; and
determine an emissions quantity of said controlled substances utilizing said ratio and said quantity of said controlled substances.

31. The system of claim 30 wherein said second data set further contains information whether said substance is a specified compound.

32. The system of claim 30 wherein said second data set further contains a control object code for designating the source of the control.

33. The system of claim 30 wherein said process is a chemical reaction.

34. The system of claim 30 further comprising a fourth data set containing handling precautions, hazards and legal regulations for said materials.

35. The system of claim 30 wherein said data sets are provided by an outsourcing company.

36. A system for management of chemical materials comprising:
a first data set containing which substances comprise said materials;
a second data set containing which of said substances are to be controlled, said substances being categorized by a group control number;
a third data set containing a ratio of discharge of said controlled substances in a process;
said first and second data sets being utilized to analyze a preset amount of said materials in said process and determine a quantity of said controlled substances;
said ratio and said quantity of said controlled substances being utilized to determine an emissions quantity of said controlled substances; and
wherein said group control number is the same for said substances in the same group.

37. A system for management of chemical materials comprising:
a first data set containing which substances comprise said materials;
a second data set containing which of said substances are to be controlled, said substances being categorized by a group control number;
a third data set containing a ratio of discharge of said controlled substances in a process;
fourth data set containing handling precautions, hazards and legal regulations for said materials;
said first and second data sets being utilized to analyze a preset amount of said materials in said process and determine a quantity of said controlled substances;
said ratio and said quantity of said controlled substances being utilized to determine an emissions quantity of said controlled substances; and
wherein said group control number is the same for said substances in the same group.

38. A system for management of chemical materials comprising:
a first data set containing which substances comprise said materials;
a second data set containing which of said substances are to be controlled, said substances being categorized by a group control number;
a third data set containing a ratio of discharge of said controlled substances in a process;
said first and second data sets being utilized to analyze a preset amount of said materials in said process and determine a quantity of said controlled substances; and
said ratio and said quantity of said controlled substances being utilized to determine an emissions quantity of said controlled substances.

39. A method for management of chemical materials comprising the steps of:
providing a first data set containing substances which comprise said materials;
providing a second data set containing legally controlled substances, wherein a substance which is not legally controlled but belongs to one of said legally controlled substances is grouped to one of said legally controlled substances by a group control number;
providing a third data set containing a ratio of discharge of said controlled substances in a process;
analyzing a preset amount of said materials in said process and determining a quantity of said controlled substances utilizing said first and second data set;
determining an emissions quantity of said controlled substances utilizing said ratio and said quantity of said controlled substances; and
wherein said group control number is the same for said substances in the same group.

40. A method for management of chemical materials comprising the steps of:
providing a first data set containing which substances comprise said materials;
providing a second data set containing which of said substances are to be controlled, said substances being categorized by a group control ID;
providing a third data set containing a ratio of discharge of said controlled substances in a process;
analyzing a preset amount of said materials in said process and determining a quantity of said controlled substances utilizing said first and second data set;
determining an emissions quantity of said controlled substances utilizing said ratio and said quantity of said controlled substances; and
wherein said group control ID is the same for said substances in the same group.
